# EUROPEAN PATENT APPLICATION

(11) **EP 4 524 549 A1**
(43) Date of publication of application: **19.03.2025**
(21) Application number: 23803462.3
(22) Date of filing: 27.04.2023
(51) Int. Cl.: G01N 21/3504

(54) **INFRARED GAS ANALYZER, AND INFRARED GAS ANALYSIS METHOD**

(30) Priority: 09.05.2022 JP 2022077168
(71) Applicant: HORIBA, Ltd., Kyoto-shi Kyoto 601-8510 (JP)
(72) Inventor: SAKAKURA, Seiji, Kyoto-shi, Kyoto 601-8510 (JP); IMAMURA, Yuki, Kyoto-shi, Kyoto 601-8510 (JP)
(74) Representative: Müller Hoffmann & Partner
(86) International application number: PCT/JP2023/016587
(87) International publication number: WO 2023/218983

(57) **Abstract**

The present invention is one which reduces running costs by eliminating the need for a catalyst, which is a consumable item, and comprises a measurement cell 2 into which sample gas is introduced; an infrared light source 3 that irradiates the measurement cell 2 with infrared light; an infrared light detector 4 that detects infrared light that has passed through the measurement cell 2; and a gas filter 5 within which a plurality of interference components that interfere with a measurement component in the sample gas are enclosed.

## Description

### Technical Field

The present invention relates to an infrared gas analyzer and an infrared gas analysis method.

### Background Art

In recent years, dinitrogen monoxide (N₂O) has attracted attention as a greenhouse gas that contributes to global warming. It is desirable to reduce N₂O in various industrial sectors such as sewage treatment facilities, cleaning plants, industrial waste treatment plants, and chemical plants.

Meanwhile, non-dispersive infrared absorption devices (NDIR analyzers) are used to measure the concentration of measurement components in exhaust gas emitted in the above industrial sectors, as shown in Patent Document 1.

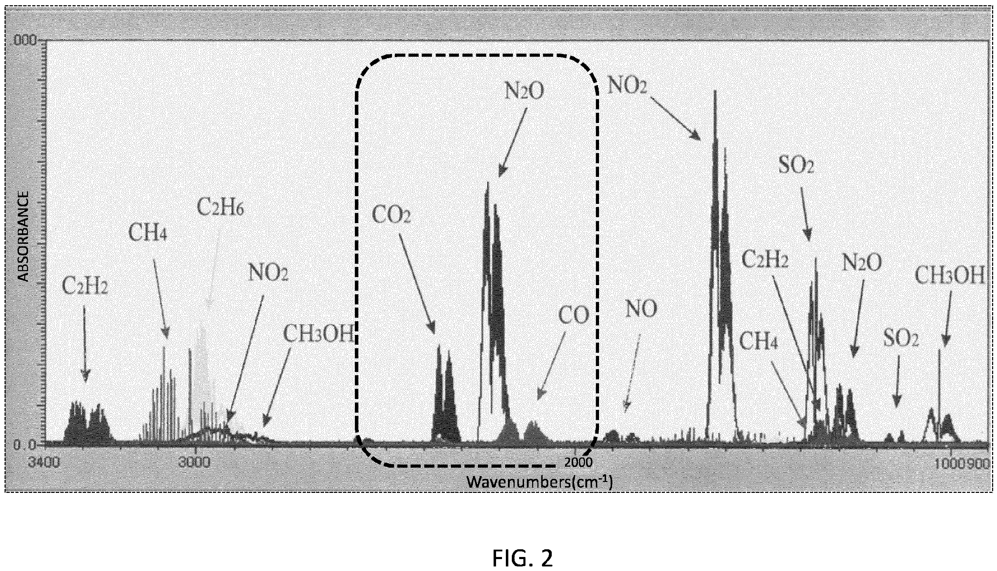

Here, as shown in FIG 2, when the NDIR analyzer is used to measure the concentration of N₂O in a sample gas, the infrared absorption wavelength range of carbon monoxide (CO) overlaps the infrared absorption wavelength range of N₂O, and CO is an interference component of N₂O in its infrared absorption wavelength range. For this reason, attempts have been made to reduce the interference effects of CO by oxidizing CO in the sample gas to carbon dioxide (CO₂) using an oxidation catalyst.

However, the oxidation catalyst, which oxidizes CO to CO₂, is a consumable item that requires periodic replacement and other maintenance, resulting in high running costs.

### Prior Art Literature

### Patent Literature

Patent Document 1: JP 2013-96889 A

### Summary of Invention

### Problem to be Solved by the Invention

The present invention was developed to solve the above-mentioned problems, and its main object is to reduce running costs by eliminating the need for a catalyst, which is a consumable item.

### Means for Solving the Problem

An infrared gas analyzer according to the present invention is characterized in comprising: a measurement cell into which sample gas is introduced; an infrared light source that irradiates the measurement cell with infrared light; an infrared light detector that detects infrared light that has passed through the measurement cell; and a gas filter within which a plurality of interference components that interfere with a measurement component in the sample gas are enclosed.

The infrared gas analyzer configured as such has a gas filter within which a plurality of interference components that interfere with the measurement component in the sample gas are enclosed, so that a catalyst that oxidizes or reduces at least one of the plurality of interference components is no longer necessary and, as a result, running costs can be reduced. In addition, since a plurality of interference components are included in the gas filter, the interference effects of a plurality of interference components on the measurement component can be reduced.

In a specific aspect of the gas filter, it is preferable that the gas filter has enclosed within a plurality of interference components that do not react with each other or a plurality of interference components that are in a state of stable equilibrium with each other.

The measurement component of the infrared gas analyzer of the present invention is preferably dinitrogen monoxide (N₂O), a type of greenhouse gas that contributes to global warming. By measuring the concentration of N₂O, the infrared gas analyzer of the present invention can be suitably used in industrial sectors which necessitate a reduction in negative environmental impacts.

In the infrared light wavelength range, the infrared absorption wavelength range of carbon dioxide (CO₂) and the infrared absorption wavelength range of carbon monoxide (CO) each overlap the infrared absorption wavelength range of measurement component N₂O. Thus, CO₂ and CO are interference components of N₂O. In order to remove the interference effects from these interference components, it is preferably that the gas filter has enclosed within carbon dioxide (CO₂) gas and carbon monoxide (CO) gas.

Furthermore, if there are interference components other than CO₂ and CO that have interference effects on N₂O, said components may be enclosed within the gas filter. For example, if methane (CH₄) is included in high concentrations in the sample gas, interference effects of CH₄ will arise. Thus, it is preferably that, in addition to CO₂ gas and CO gas, the gas filter also has CH₄ gas enclosed within.

An infrared gas analysis method according to the present invention is characterized as being an infrared gas analysis method of analyzing a measurement component in a sample gas by irradiating a measurement cell into which the sample gas has been introduced with infrared light and detecting the infrared light that has passed through the measurement cell with an infrared light detector, wherein interference effects of a plurality of interference components on the measurement component are reduced by using a gas filter within which a plurality of the interference components that interfere with the measurement component are enclosed.

The infrared gas analyzer according to the present invention may further comprise an arithmetic unit that calculates a concentration of the measurement component in the sample gas using an output of the infrared light detector; and be one wherein the infrared light detector includes a measurement component detector for measuring a concentration of the measurement component and an interference component detector for measuring a concentration of an interference component that interferes with the measurement component; and the arithmetic unit calculates the concentration of the measurement component by subtracting an output of the interference component detector multiplied by a predetermined weighting coefficient from an output of the measurement component detector. In this configuration, since the predetermined weighting coefficient k varies with the concentration of interference components, there is a possibility that measurement errors will occur if a constant weighting coefficient k is used.

Thus, it is preferably that the arithmetic unit changes or corrects the weighting coefficient based on the concentration of the interference component.

Moreover, an infrared gas analyzer according to the present invention may be one characterized by comprising a measurement cell into which sample gas is introduced; an infrared light source that irradiates the measurement cell with infrared light; an infrared light detector that detects infrared light that has passed through the measurement cell; and an arithmetic unit that calculates a concentration of a measurement component in the sample gas using an output of the infrared light detector; wherein the infrared light detector includes a measurement component detector for measuring a concentration of the measurement component and an interference component detector for measuring a concentration of an interference component that interferes with the measurement component; and the arithmetic unit, by subtracting an output of the interference component detector multiplied by a predetermined weighting coefficient from an output of the measurement component detector, calculates the concentration of the measurement component and also changes or corrects the weighting coefficient based on the concentration of the interference component.

### Effect of the Invention

The present invention configured as such allows the reduction of running costs by eliminating the need for a catalyst, which is a consumable item.

### Brief Description of the Drawings

FIG 1: A schematic diagram showing an infrared gas analyzer of a first embodiment of the present invention.
FIG 2: A diagram showing the infrared absorption spectrum of each of several components.
FIG 3: A schematic diagram showing an infrared gas analyzer according to a variation embodiment of the present invention.
FIG 4: A schematic diagram showing an infrared gas analyzer according to a variation embodiment of the present invention.

### Detailed Description of the Preferred Embodiments

A first embodiment of an infrared gas analyzer according to the present invention will now be described with reference to the drawings.

In addition, in each of the drawings shown below, for the purpose of easy understanding, some parts are omitted or exaggerated in schematic form. The same components are denoted by the same reference numerals and the description thereof will be omitted as appropriate.

The infrared gas analyzer 100 according to the present embodiment measures the component concentration of dinitrogen monoxide (N₂O), nitrogen oxides (NO_{X}), sulfur dioxide (SO₂), carbon monoxide (CO), carbon dioxide (CO₂), methane (CH₄), etc., in sample gases in exhaust gases (flue exhaust gas) emitted from industrial facilities such as sewage treatment facilities, cleaning plants, industrial waste treatment plants and chemical plants via a non-dispersive infrared absorption method (NDIR).

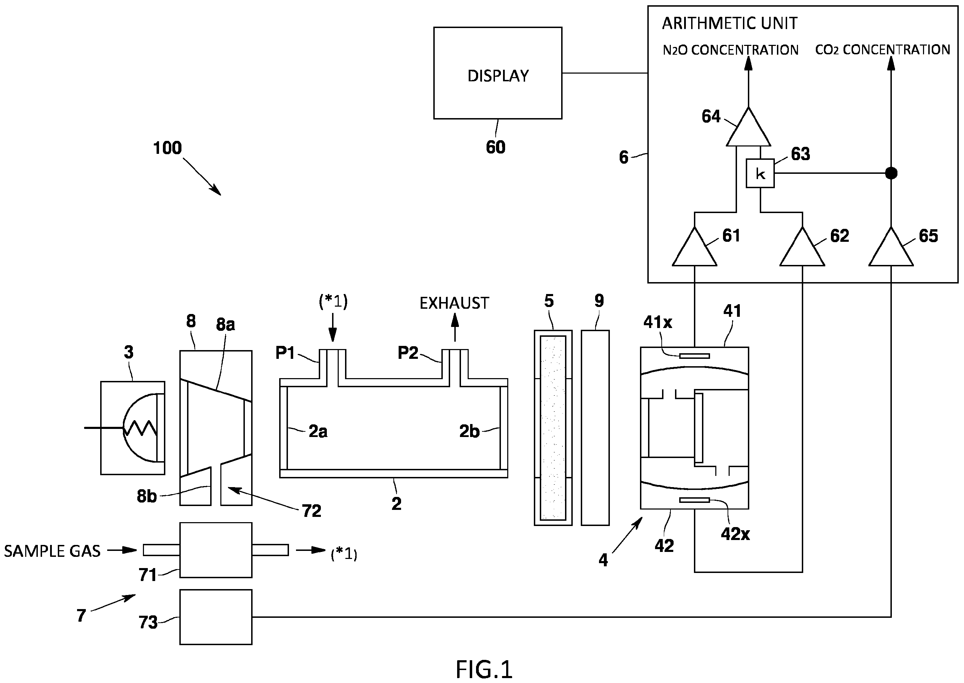

Specifically, the infrared gas analyzer 100 measures the concentration of N₂O in a sample gas and, as shown in FIG 1, includes a measurement cell 2 into which the sample gas is introduced, an infrared light source 3 provided on one end side of the measurement cell 2 that irradiates the measurement cell 2 with infrared light, an infrared light detector 4 provided on the other end side of the measurement cell 2 that detects infrared light that has passed through the measurement cell 2, a gas filter 5 within which an interference component that interferes with the measurement component (N₂O) is enclosed, and an arithmetic unit 6 that calculates the concentration of the measurement component (N₂O) having acquired an output from the infrared light detector 4.

The measurement cell 2 has, for example, a roughly cylindrical shape, with both end portions sealed by cell window members 2a, 2b made of infrared transmissive material, and has on its side wall an introduction port P1 for introducing sample gas into the cell and an outlet port P2 for leading sample gas out of the cell.

The infrared light source 3 is installed at one end side of the measurement cell 2, opposite the cell window member 2a, and irradiates infrared light into the interior of the measurement cell 2. An optical chopper (not shown) is provided between the infrared light source 3 and the measurement cell 2, and is configured to, for example, be rotated by a motor, so as to interrupt (chop) the infrared light generated by the infrared light source 3 at a fixed period.

The infrared light detector 4 is installed opposite the cell window member 2b on the other end side of the measurement cell 2, and has a measurement component detector 41 as the main detector for measuring the concentration of the measurement component (N₂O) and an interference component detector 42 that is a compensation detector for measuring the concentration of the interference component (here, CO₂). The measurement component detector 41 and the interference component detector 42 are, in this order, optically arranged in series from said other end side of the measurement cell 2. The detection signals obtained by the measurement component detector 41 and the detection signals obtained by the interference component detector 42 are output to the arithmetic unit 6.

The measurement component detector 41 is, for example, a pneumatic detector of a condenser microphone type. In the measurement component detector 41, both end portions of the main body block, which is made of corrosion-resistant metal, are sealed by window members made of infrared transmissive material, and a condenser microphone 41x is installed inside. The interior of the measurement component detector 41 has enclosed within the measurement component (N₂O), or a filler gas for measurement purposes that exhibits equivalent infrared light absorption characteristics, and detects the infrared light intensity in the wavelength range that matches the infrared absorption spectrum of the measurement component. The measurement component detector 41 of the present embodiment is sensitive to both the measurement component and interference component.

Since the measurement component in the present embodiment is N₂O, a predetermined concentration of N₂O gas is enclosed within the measurement component detector 41. The measurement component detector 41 thereby detects infrared light intensity in the wavelength range which matches the infrared absorption spectrum of N₂O (see FIG 2).

Similarly to the measurement component detector 41, the interference component detector 42 is, for example, a pneumatic detector of a condenser microphone type. In the interference component detector 42, both end portions of the main body block, which is made of corrosion-resistant metal, are sealed by window members made of infrared transmissive material, and a condenser microphone 42x is placed inside. The interference component detector 42 has enclosed within the interference component (CO₂), or a filler gas for interference purposes that exhibits equivalent infrared light absorption characteristics, and detects the infrared light intensity in the wavelength range that matches the infrared absorption spectrum of the interference component. The interference component detector 42 is provided at the rear of the measurement component detector 41 and is sensitive to the interference component due to most of the N₂O being absorbed by the measurement component detector 41.

In the present embodiment, to correct for the interference effects of CO₂ on N₂O, the interference component detector 42 has enclosed within a higher concentration of N₂O gas than the N₂O gas in the measurement component detector 41. The interference component detector 42 thereby detects infrared light intensity in the wavelength range which matches the infrared absorption spectrum of CO₂ (see FIG 2).

The gas filter 5 is provided between the measurement cell 2 and infrared light detector 4 to reduce or eliminate the absorption spectra of CO₂ and CO, which have interference effects on the absorption spectrum of the measurement component (N₂O). Specifically, the gas filter 5 has a configuration wherein a mixed gas, which is a mixture of CO₂ gas and CO gas, is enclosed within a single chamber. Here, the chamber of the gas filter 5 is sealed at both end portions by window members made of infrared transmissive material. By configuring the gas filter 5 as such as a single chamber, the gas filter 5 can be made smaller, and the loss of infrared light intensity in the infrared absorption wavelength range of N₂O due to passing through the infrared gas filter 5 can be reduced.

The gas filter 5 of the present embodiment has enclosed within a mixed gas of 60 vol% CO₂ gas and 40 vol% CO gas. Thus, enclosed in the gas filter 5 is a mixed gas of a plurality of interference components that do not react with each other, or a mixed gas of a plurality of interference components that are in a state of stable equilibrium with each other.

Because the interference effects of CO₂ do not change (increase) significantly when the amount of CO₂ gas enclosed within the gas filter 5 is 50 vol% or more, it is preferable that the amount of CO₂ gas be 50 vol% or more. On the other hand, assuming that the sample gas contains a CO concentration roughly estimated to be 1000 ppm, the gas filter 5 should be filled with 20 vol% CO gas to remove the interference effects of that CO. Taking into consideration the amount of CO₂ gas enclosed within, the amount of CO gas sealed in the gas filter 5 will be 50 vol% or less.

Furthermore, in the present embodiment, an optical filter 9 is provided to narrow the wavelengths of infrared light detected by the infrared light detector 4 in order to reduce the interference effects of components such as SO₂ and CH₄ in the sample gas. The optical filter 9 transmits infrared light in the absorption wavelength range of N₂O; specifically, the optical filter 9 transmits in the wavelength range of 4 µm to 5 µm, for example. The optical filter 9 of the present embodiment is provided between the measurement cell 2 and the infrared light detector 4; more specifically, the optical filter 9 is provided between the gas filter 5 and the infrared light detector 4.

The arithmetic unit 6 calculates the concentration of N₂O based on the difference between the output signal of the measurement component detector 41 and the output signal of the interference component detector 42. The arithmetic unit 6 can display the calculated N₂O concentration and other measurement results on a display unit 60 which is a display or the like.

Specifically, the arithmetic unit 6 has a measurement pre-amplifier 61 that amplifies and outputs the output signal of the measurement component detector 41, an interference pre-amplifier 62 that amplifies and outputs the output signal of the interference component detector 42, an amplifier 63 that multiplies the output from the interference pre-amplifier 62 by a predetermined weighting coefficient k to amplify it, and a subtractor 64 that subtracts the output signal of the amplifier 63 from the output signal from the measurement pre-amplifier 61.

Here, the predetermined weighting coefficient k is a coefficient representing the ratio (M2/M1) of the output signal (M2) of the measurement component detector 41 to the output signal (M1) of the interference component detector 42 when the interference component (CO₂) is measured. The weighting coefficient k is adjusted so as to be close to 1; that is, so that the output signal of the measurement component detector 41 and the output signal of the interference component detector 42 are nearly equal. Specifically, one possibility is to adjust the resistance value stored within the interference pre-amplifier 62 so that the coefficient k approaches 1. Besides that, it is conceivable that the coefficient k could be brought closer to 1 by adjusting the concentration of the filler gas for measurement purposes or the filler gas for interference purposes.

Since the weighting coefficient k described above varies with CO₂ concentration, using a constant weighting coefficient k could result in measurement errors. For this reason, the infrared gas analyzer 100 of the present embodiment is further equipped with a CO₂ measurement unit 7 that measures the concentration of CO₂ in the sample gas, and the CO₂ concentration obtained by the CO₂ measurement unit 7 is used to change or correct the weighting coefficient k.

The CO₂ measurement unit 7 has a CO₂ measurement cell 71 into which sample gas is introduced, an infrared light irradiation unit 72 that irradiates the CO₂ measurement cell 71 with infrared light, and a CO₂ detector 73 that detects the infrared light transmitted through the CO2 measurement cell 71. In the present embodiment, the sample gas that has passed through the CO₂ measurement cell 71 is introduced into the measurement cell 2, but the opposite may also be true.

The CO₂ measurement cell 71 has the same configuration as the measurement cell 2 described above, but its cell length is shorter than the cell length of the measurement cell 2 in accordance with the CO₂ concentration. Similarly to the measurement component detector 41 described above, the CO₂ detector 73 is, for example, a pneumatic detector of a condenser microphone type.

Here, the infrared light irradiation unit 72 is configured to use the infrared light source 3 described above and a light condensing member 8 provided between the infrared light source 3 and the measurement cell 2. The light condensing member 8 has a first optical path 8a formed by a tapered inner wall surface that concentrates infrared light. By passing through the first optical path 8a, infrared light from the infrared light source 3 is concentrated and irradiated to the measurement cell 2. A second optical path 8b, for irradiating the CO₂ measurement cell 71 with infrared light, is connected to the inner wall surface that forms the first optical path 8a. Infrared light reflected by the tapered inner wall surface pass through this second optical path 8b, and the infrared light that passes through the second optical path 8b is irradiated to the CO₂ measurement cell 71.

The arithmetic unit 6 is equipped with a CO₂ detection amplifier 65 that amplifies and outputs the output signal of the CO₂ detector 73, and the CO₂ concentration is calculated from the output signal of said CO₂ detection amplifier 65. Here, the output signal of the CO₂ detection amplifier 65 or the CO₂ concentration obtained therefrom is input to the amplifier 63 of the arithmetic unit 6.

The amplifier 63 changes or corrects the weighting coefficient k, which is multiplied by the output signal of the interference component detector 42, in accordance with the output signal of the CO₂ detection amplifier 65 or the CO₂ concentration obtained therefrom. Here, the weighting coefficient k is determined in advance using a plurality of CO₂ gases with known concentrations, and stored in the arithmetic unit 6. Then, when measurement is performed, the weighting coefficient k is changed or corrected in accordance with the output signal of the CO₂ detection amplifier 65 or the CO₂ concentration obtained therefrom.

In the infrared gas analyzer 100 of the present embodiment described above, the gas filter 5 removes the interference effects of CO and reduces the interference effects of CO₂. Moreover, in the infrared gas analyzer 100 described above, by using the measurement component detector 41, which detects N₂O and CO₂, and the interference component detector 42, which detects CO₂, the interference effects of CO₂ added to the output signal of the measurement component detector 41 are removed by performing the electrical operation of (output of the measured component detector 41) - (output of the interference component detector 42 x k).

### Effects of the Present Embodiment

Configured according to the present embodiment, the infrared gas analyzer 100 has a gas filter 5 in which a plurality of interference components (CO₂ and CO) that interfere with the measurement component (N₂O) in the sample gas are enclosed, so that an oxidation catalyst that oxidizes at least one of the plurality of interference components (here, CO) is no longer necessary and, as a result, running costs can be reduced. In addition, since a plurality of interference components are included in the gas filter 5, the interference effects of a plurality of interference components on the measurement component can be reduced.

In addition, in the present embodiment, since the weighting coefficient k used to calculate N₂O concentration is changed or corrected using the CO₂ concentration obtained by the CO₂ measurement unit 7, the N₂O concentration can be accurately determined regardless of the CO₂ concentration.

### Other Embodiments

The gas filter 5 in the above embodiment was filled with CO₂ gas and CO gas as interference components; however, for example, it could also be filled with CH₄ gas as an additional interference component.

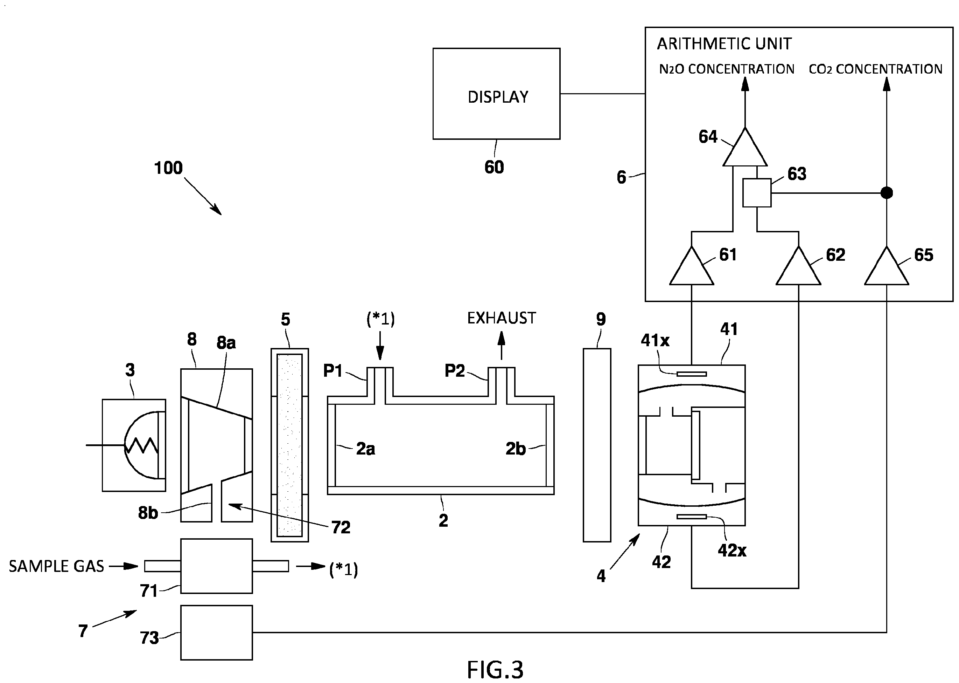

The gas filter 5 in the above embodiment is provided between the measurement cell 2 and the infrared light detector 4, but it is also possible for it to be installed between the infrared light source 3 and the measurement cell 2 (if there is a light condensing member 8, between the light condensing member 8 and the measurement cell 2), as shown in FIG 3. Also in cases where an optical filter 9 is provided, it is possible for the optical filter 9 to be provided between the infrared light source 3 and the measurement cell 2 (if there is a light condensing member 8, between the light condensing member 8 and the measurement cell 2 or between the infrared light source 3 and the light condensing member 8). Alternatively, the gas filter 5 may be included within the infrared light source 3 or within the measurement cell 2.

Furthermore, in the embodiment described above, an optical filter 9 is used to narrow the wavelength of infrared light detected by the infrared light detector 4 in order to reduce the interference effects of components such as SO₂ and CH₄, but the optical filter 9 does not have to be used.

The infrared gas analyzer of the embodiment described above uses an optical chopping system that interrupts (chops) the infrared light from the infrared light source 3 at a fixed period using an optical chopper, but it may instead be a fluid modulation system that alternately introduces sample gas and reference gas into the measurement cell 2 at a fixed period.

Furthermore, the infrared gas analyzer of the embodiment described above measures the concentration of N₂O, but it may instead be one that measures the concentration of other components such as NO_{X}, SO₂, CO, CO₂, CH₄, etc., or it may measure the concentration of two or more of said components.

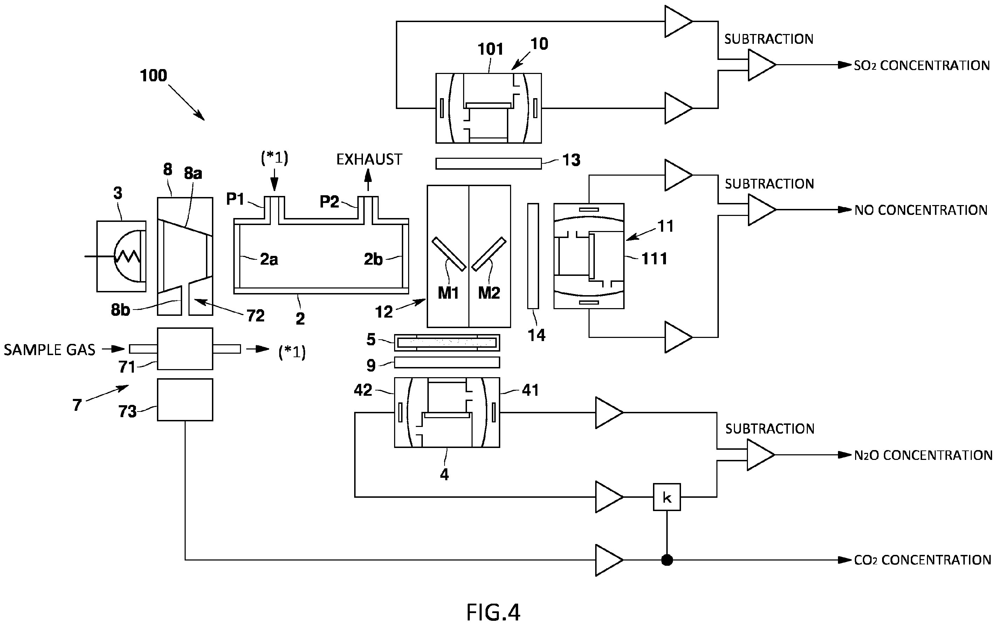

For example, an example configuration of an infrared gas analyzer 100 that measures the concentration of each of four components is shown in FIG 4. The infrared gas analyzer 100 shown in FIG 4 measures the concentration of each of four components, for example, N₂O, SO₂, CO₂, and NO, and is equipped with a SO₂ measurement unit 10 and a NO measurement unit 11 in addition to the configuration of the embodiment described above.

The SO₂ measurement unit 10 has an SO₂ detector 101 that detects infrared light transmitted through the measurement cell 2. The NO measurement unit 11 has an NO detector 111 that detects infrared light transmitted through the measurement cell 2. Similarly to the measurement component detector 41 described above, the SO₂ detector 101 and the NO detector 111 are, for example, pneumatic detectors of a condenser microphone type.

In this example configuration, the infrared light transmitted through the measurement cell 2 is split towards infrared light detector 4 (N₂O detector), SO₂ detector 101, and NO detector 111 using a beam splitter 12 that uses half mirrors M1, M2, etc.

As shown in FIG 4, a gas filter 5 similar to that of the previous embodiment is provided between the beam splitter 12 and the infrared light detector 4 (N₂O detector). Here, an optical filter 9 is also provided between the beam splitter 12 and the infrared light detector 4 (N₂O detector). Moreover, optical filters 13 and 14 are also provided, respectively, between the beam splitter 12 and the SO₂ detector 101 and between the beam splitter 12 and the NO detector 111. In addition, a gas filter may be provided between the beam splitter 12 and the SO₂ detector 101 and between the beam splitter 12 and the NO detector 111 to remove the interference effects of interference components on their measurement components. Although FIG 4 shows an example of a configuration that measures the concentration of four components, it can be configured to measure the concentration of three components or the concentration of five or more components by changing the configuration of the beam splitter, for example.

The above embodiment analyzes exhaust gas emitted from external combustion engines, but it can also be used to analyze exhaust gas emitted from internal combustion engines of vehicles, ships, etc.

Various other variations and combinations of embodiments may be made as long as they do not contradict the purpose of the present invention.

### Industrial Applicability

The present invention allows the reduction of running costs by eliminating the need for a catalyst, which is a consumable item.

### Explanation of Reference Signs

100: infrared gas analyzer
2: measurement cell
3: infrared light source
4: infrared light detector
41: measurement component detector
42: interference component detector
5: gas filter
6: arithmetic unit
7: CO₂ measurement unit
8: light condensing member
9: optical filter

## Claims

1. An infrared gas analyzer, comprising:
a measurement cell into which sample gas is introduced;
an infrared light source that irradiates the measurement cell with infrared light;
an infrared light detector that detects infrared light that has passed through the measurement cell; and
a gas filter within which a plurality of interference components that interfere with a measurement component in the sample gas are enclosed.

2. The infrared gas analyzer according to claim 1, wherein
the gas filter has enclosed within a plurality of interference components that do not react with each other or a plurality of interference components that are in a state of stable equilibrium with each other.

3. The infrared gas analyzer according to claim 1 or 2, wherein
the measurement component is dinitrogen monoxide (N₂O).

4. The infrared gas analyzer according to any one of claims 1 to 3, wherein
the plurality of interference components includes carbon dioxide (CO₂) and carbon monoxide (CO).

5. The infrared gas analyzer according to claim 4, wherein
the plurality of interference components includes methane (CH₄).

6. The infrared gas analyzer according to any one of claims 1 to 5, further comprising:
an arithmetic unit that calculates a concentration of the measurement component in the sample gas using an output of the infrared light detector, wherein
the infrared light detector includes a measurement component detector for measuring a concentration of the measurement component and an interference component detector for measuring a concentration of an interference component that interferes with the measurement component; and
the arithmetic unit calculates the concentration of the measurement component by subtracting an output of the interference component detector multiplied by a predetermined weighting coefficient from an output of the measurement component detector, and changes or corrects the weighting coefficient based on the concentration of the interference component.

7. An infrared gas analysis method of analyzing a measurement component in a sample gas by irradiating a measurement cell into which the sample gas has been introduced with infrared light and detecting the infrared light that has passed through the measurement cell with an infrared light detector, wherein
interference effects of a plurality of interference components on the measurement component are reduced by using a gas filter within which the plurality of interference components that interfere with the measurement component are enclosed.
